# EUROPEAN PATENT APPLICATION

(11) **EP 4 280 084 A1**
(43) Date of publication of application: **22.11.2023**
(21) Application number: 22305757.1
(22) Date of filing: 20.05.2022
(51) Int. Cl.: G06F 16/907, G06F 16/25

(54) **PREDICTIVE DATA SOURCE SELECTION FOR REQUEST HANDLING SYSTEMS**

(71) Applicant: Amadeus S.A.S., 06410 Biot (FR)
(72) Inventor: AMADIEU, Olivier, Roquefort Les Pins (FR); QI, Rui, Antibes (FR); BARON, Romain, Antibes (FR); BORDAS, Julien, Antibes (FR); DEVAUX, Yannick, Mougins (FR); CAZORLA, Jean-Marie, Opio (FR); THIREAU, Jean-Sebastien, Grasse (FR); VIOLLET, Erwan, Mougins (FR); LE GRAND, Guillaume, Le Cannet (FR)
(74) Representative: Samson & Partner Patentanwälte mbB

(57) **Abstract**

A method includes: at an aggregator, storing historical data representing: (i) a plurality of previous search requests received at the aggregator, and (ii) for each previous search request, an outcome indicator defining whether a supplier subsystem generated previous search results meeting a relevance threshold in response to the previous search request; receiving, at the aggregator from a client subsystem, a search request containing a set of client search parameters; in response to receiving the search request, determining, based on the search request and the historical data, a likelihood of the supplier subsystem generating search results meeting the relevance threshold; and selecting, according to the likelihood, a routing action for the search request, relative to the supplier subsystem.

## Description

### BACKGROUND

Certain computing systems perform functionality that involves receiving, processing, and responding to large volumes of requests (e.g., thousands of requests per hour). Generating responses to such requests may further be computationally complex, e.g., to a significantly greater degree than returning previously stored and indexed search results.

### SUMMARY

The present invention is defined by the independent claims.

An aspect of the specification provides a method, comprising: at an aggregator, storing historical data representing: (i) a plurality of previous search requests received at the aggregator, and (ii) for each previous search request, an outcome indicator defining whether a supplier subsystem generated previous search results meeting a relevance threshold in response to the previous search request; receiving, at the aggregator from a client subsystem, a search request containing a set of client search parameters; in response to receiving the search request, determining, based on the search request and the historical data, a likelihood of the supplier subsystem generating search results meeting the relevance threshold; and selecting, according to the likelihood, a routing action for the search request, relative to the supplier subsystem.

Another aspect of the specification provides a computing device, comprising: a communications interface; a memory storing historical data representing (i) a plurality of previous search requests received at the aggregator, and (ii) for each previous search request, an outcome indicator defining whether a supplier subsystem generated previous search results meeting a relevance threshold in response to the previous search request; and a processor configured to: receive, from a client subsystem, a search request containing a set of client search parameters; in response to receiving the search request, determine, based on the search request and the historical data, a likelihood of the supplier subsystem generating search results meeting the relevance threshold; and select, according to the likelihood, a routing action for the search request, relative to the supplier subsystem.

According to still another aspect, a computer program is provided, the computer program product comprising program code instructions e.g. stored on a computer readable medium to execute the method steps according to any one of the aforementioned aspects, when said program is executed on a computer.

Further refinements are set forth by the dependent claims.

Further aspects are apparent from the subsequent description.

### BRIEF DESCRIPTIONS OF THE DRAWINGS

Embodiments are described with reference to the following figures, in which:
FIG. 1 is a diagram illustrating a system for predictive data source selection, performing a first portion of a request handling process.
FIG. 2 is a diagram illustrating a system for predictive data source selection, performing a second portion of a request handling process.
FIG. 3 is a diagram illustrating certain internal components of the aggregator of FIG. 1.
FIG. 4 is a flowchart of a request handling method.
FIG. 5 is a diagram illustrating example contents of the repository of the system of FIG. 1.
FIG. 6 is a diagram illustrating an example performance of block 425 of the method of FIG. 4.
FIG. 7 is a diagram illustrating another example performance of block 425 of the method of FIG. 4.

### DETAILED DESCRIPTION

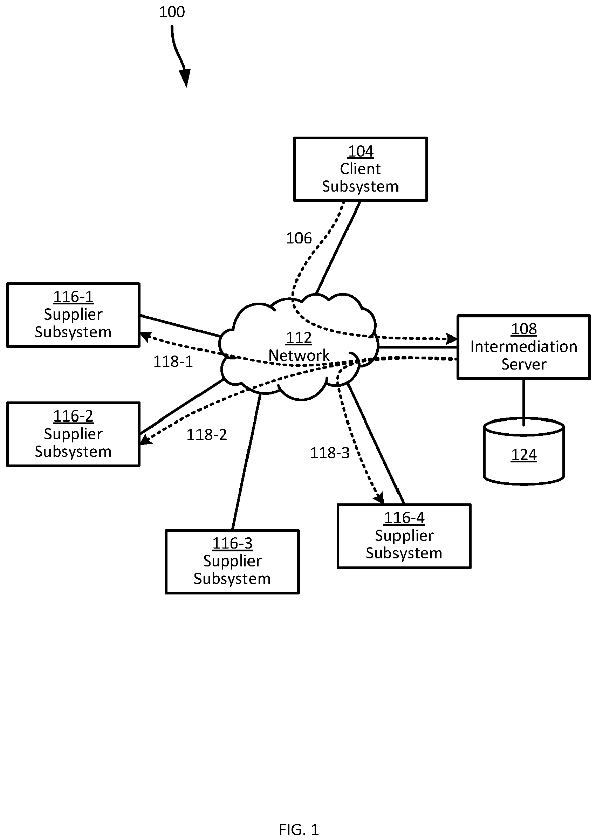

FIG. 1 illustrates a request-handling system 100. In general, the requests handled within the system 100 are generated at a client subsystem 104, and include a variety of search parameters. The client subsystem 104 includes at least one computing device, such as a desktop computer, a mobile computer, or the like. The client subsystem 104 can also include a server or set of servers implementing a software platform that enables the receipt of inputs from consumer-level devices (such as the above-mentioned desktop or mobile computer), for generating search requests. As will be apparent in the discussion below, the system 100 may include a plurality of distinct client subsystems 104, however a single client subsystem 104 is illustrated for simplicity.

A search request 106 generated by the client subsystem 104 is transmitted to an intermediation server 108 via a network 112 (e.g., any suitable combination of local and wide-area networks). The intermediation server 108, also be referred to herein as the aggregator 108, is implemented as a server, or a set of servers (e.g., implemented as a suitable distributed computing system). The aggregator 108, upon receiving the search request 106, distributes the search request among a set of supplier subsystems 116-1, 116-2, 116-3, and 116-4 (collectively referred to as the supplier subsystems 116, and generically referred to as a supplier subsystem 116; similar nomenclature may also be used for other components herein). The system 100 can include a smaller number of supplier subsystems 116, or a larger number of supplier subsystems 116, than shown in FIG. 1.

Each supplier subsystem 116 is implemented as a server or set of servers, and employs a wide variety of data processing mechanisms and stored data to generate search results corresponding to the search request. The supplier subsystems 116 are typically independent from one another, and may implement distinct processing mechanisms and have access to distinct sets of stored data used to generate the search results.

The aggregator 108 transmits search requests 118-1, 118-2, and 118-3 to the supplier subsystems 116-1, 116-2, and 116-4. The search requests 118 may be identical to the original search request 106, or may include additional information enriching the search request 106. Such additional information need not be the same for each supplier subsystem 116. As will be apparent, the aggregator 108 did not send a search request to the supplier subsystem 116-3 in the illustrated example. As will be discussed in greater detail below, the aggregator 108 can select a set of the supplier subsystems 116 to which each search request will be passed. The aggregator 108 need not select the same set of supplier subsystems 116 for each search request received from the client subsystem 104.

Following receipt of the corresponding search request 118, each of the supplier subsystems 116-1, 116-2, and 116-4 is configured to generate search results, for eventual transmission to the aggregator 108. The search request 106, and the generation of search results by the supplier subsystems 116 in the system 100, have certain characteristics that render the handling of the search request 106 computationally costly for the components of the system 100. For example, the search results are generally not stored in a form in which they can be simply retrieved by the supplier subsystems 116 and returned to the aggregator 108 for delivery to the client subsystem 104. Instead, each supplier subsystem 116 generates each search result by retrieving or dynamically generating distinct elements of the search result, and determining combinations of such elements that are likely to accurately match the search parameters of the search request 106. The number of available elements, and therefore the number of potential combinations to be processed, may be large (e.g., numbering in the thousands or tens of thousands).

Further, the identification by a given supplier subsystem 116 of which of the above-mentioned combinations is likely to be an accurate result corresponding to the search request 106 may be uncertain. For example, although the search request 106 can include numerous search parameters, the search request 106 may nevertheless fail to completely describe the nature of the search results being sought by the originator of the search request (e.g. a customer operating the client subsystem 104). Each supplier subsystem 116 is therefore generally configured to generate a significant number of search results (e.g., tens or hundreds) to each search request 106. The search results generated by a given supplier subsystem 116 may, for example, represent a range of possible matches to the search request 106.

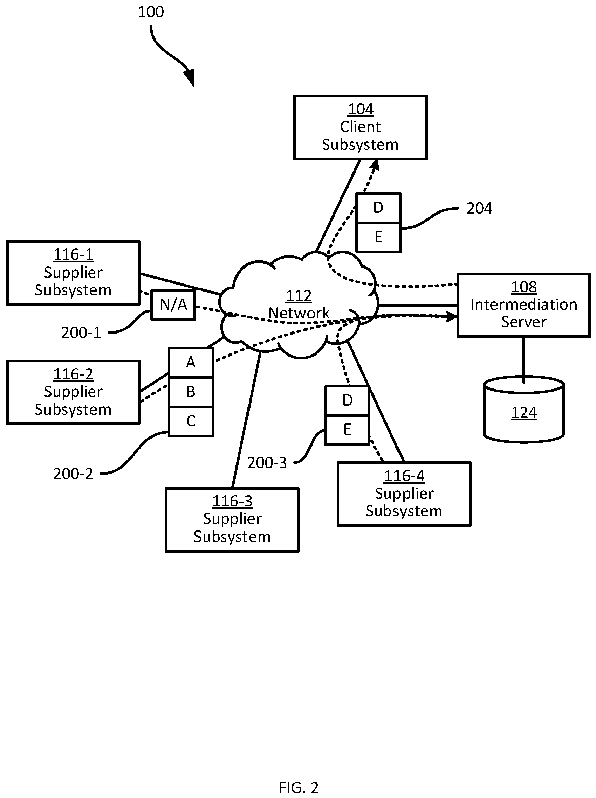

Turning to FIG. 2, the system 100 is shown following receipt of the search requests 118 from FIG. 1, and generation of search results by the relevant supplier subsystems 116. In particular, the supplier subsystem 116-1 is shown sending a message 200-1 to the aggregator indicating that the supplier subsystem 116-1 was unable to generate sufficiently accurate search results. In other examples, the supplier subsystem 116-1 (or indeed any other supplier subsystem) may send a response indicating that the supplier subsystem 116-1 cannot generate search results. In further examples, the intermediation server 108 may simply not receive a reply from the supplier subsystem 116-1 by the end of a timeout period. The supplier subsystem 116-1, in other words, committed computational resources to attempt to generate search results, but failed to obtain any output from the expenditure of those resources.

The supplier subsystem 116-2 is shown sending a message 200-2 containing search results "A", "B", and "C", and the supplier subsystem 116-4 is shown sending a message 200-3 containing search results "D" and "E". As will be apparent, the above-mentioned search results are not single-character text strings, but may include a variety of parameters defining each search result.

The aggregator 108, upon receiving the messages 200, is configured to select a set of the available search results and return that set to the client subsystem 104. Thus, the aggregator 108 is shown sending a message 204 to the client subsystem 104, containing the search results "D" and "E". That is, the aggregator 108 can process the search results received from the supplier subsystems 116, and select a subset of the search results, discarding the remainder. The proportion of search results discarded at the aggregator 108 for any given search results can be substantial, often exceeding the 60% shown in FIG. 2.

In other words, the supplier subsystem 116-1 has expended resources for no return (e.g., commercial return, when the search results represent products or services) is derived from the expenditure of those computational resources). The supplier subsystem 116-2 has also expended resources for no return, given that none of the search results "A", "B", and "C" were passed to the client subsystem 104. In other examples, certain results from the supplier subsystem 116-2 may be returned, while others are discarded by the intermediation server 108. Further, the aggregator 108 has expended computational resources in exchanging data with the supplier subsystem 116-1 to no avail, and in exchanging data with the supplier subsystem 116-2, as well as evaluating and discarding the search results in the message 200-2. Much of the expenditure of computational cycles, network bandwidth, and the like in the system 100, is therefore effectively wasted.

Further exacerbating the above challenges is the fact that search results are generated substantially in real-time with the search request 106. That is, the time elapsed between submission of the search request 106 and delivery of the search results 120 is expected to be minimal (e.g. below about five seconds). Generating the large variety of search results mentioned above at the supplier subsystems 116, and evaluating the search results at the aggregator 108, may therefore involve the deployment of substantial computing resources. As will also be apparent from the above discussion, much of the computational resources devoted to generating and transmitting search results will yield search results that are discarded either by the aggregator 108 or the client subsystem 104, such that no return (e.g., commercial return, when the search results represent products or services) is derived from the expenditure of those computational resources.

The system 100 therefore includes additional features that reduce the computational impact of handling search requests 106. In other words, those features of the system 100 may enable the client subsystem 104 to obtain the search results "D" and "E" as shown in FIG. 2, with fewer computational resources having been expended throughout the system 100 in obtaining the search results.

In particular, the aggregator 108 is configured, as will be described in greater detail below, to implement certain predictive mechanisms before sending the search requests 118 as shown in FIG. 1, to identify supplier subsystems 116 that are likely to generate relevant search results (e.g., search results likely to be returned from the aggregator 108 to the client subsystem 104, rather than being discarded by the aggregator 108). The aggregator 108 can then send search requests 118 only to those identified supplier subsystems 116, suppressing the transmission of search requests to other supplier subsystems 116 and therefore avoiding the expenditure of computational resources at supplier subsystems 116 likely to have little yield.

To implement the above functionality, the aggregator 108 is configured to access (e.g., from local storage, or via the network 112) a repository 124 of historical transaction data. The historical data in the repository 124 includes or otherwise represents previous search requests handled within the system 100. The historical data can also include, as will be discussed below, search results generated from those previous search requests, as well as handling indicators defining whether the search results were forwarded to the client subsystem 104, discarded by the aggregator 108, or the like. In some examples, the repository 124 can also contain profile data corresponding to either or both of the client subsystem 104 and the supplier subsystems 116. When such profile data is available, the aggregator 108 can be further configured to employ the profile data in selecting routing actions for search requests (e.g., between sending a search request to a given supplier subsystem 116 and suppressing such transmission). The repository 124 can also be implemented as two or more distinct repositories in some examples.

Although the specific nature of the requests and responses discussed herein is not particularly limited, for the purpose of illustration, in the discussion below the search requests 106 are requests for travel-related products and services (generally referred to as "items" below). Such products and services include, for example, airline tickets, hotel reservations, rental vehicle reservations, and the like. In that context, therefore, the client subsystem 104 may therefore be a computing device operated by or on behalf of an individual traveler or group of travelers who will make use of the above-mentioned items. The client subsystem 104 may therefore be operated directly by the traveler, or by a travel agency on behalf of the traveler. The search parameters in the request 106 can include an origin location and a destination location for a flight (e.g. cities, specific airports, or the like), as well as a departure date. Various other search parameters can also be included in the request 106, such as a return date, a number of passengers, an identifier of the traveler (e.g., a name, account identifier, or other suitable identifier distinguishing the traveler from others), and the like.

As will be apparent to those skilled in the art, in the above example, the supplier subsystems 116 are operated by supplier entities responsible for provision of the items, such as by distinct airlines. The supplier subsystems 116 therefore each store and process data defining the items (e.g., seat availability, pricing rules, and additional related services for flights) provided by the corresponding operating entities.

The downstream processing initiated by the client subsystem 104 after receipt of the search results can include, as will now be apparent, buying flight tickets. In line with the characteristics of the requests 106 and results mentioned above that complicate the handling of search requests, which flight(s) will be selected for purchase at the client subsystem 104 may be difficult to predict at the supplier subsystems 116. Similarly, it may also be difficult to predict which flights provided to the aggregator 108 will be selected for return to the client subsystem 104. The supplier subsystems 116 may therefore generate large numbers of search results, e.g., at different prices, with different associated services such as lounge access, extra baggage or the like, and/or with different combinations of flights between the origin and destination locations (e.g., whether via intermediate locations, or directly).

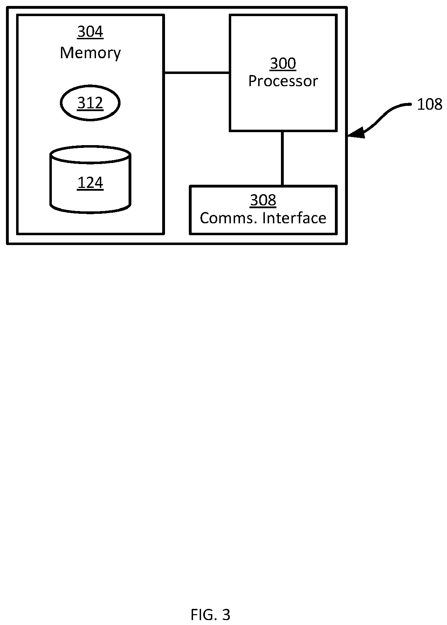

Before discussing the operation of the system 100, and in particular the predictive functionality of the aggregator 108 noted above, in greater detail, certain internal components of the aggregator 108 will be described with reference to FIG. 3.

The aggregator 108 includes at least one processor 300, such as a central processing unit (CPU) or the like. The processor 300 is interconnected with a memory 304, implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The processor 300 and the memory 304 are generally comprised of one or more integrated circuits (ICs).

The processor 300 is also interconnected with a communications interface 308, which enables the aggregator 108 to communicate with the other computing devices of the system 100 via the network 112. The communications interface 308 therefore includes any necessary components (e.g., network interface controllers (NICs), radio units, and the like) to communicate via the network 112. The specific components of the communications interface 308 are selected based on upon the nature of the network 112. The aggregator 108 can also include input and output devices connected to the processor 300, such as keyboards, mice, displays, and the like (not shown).

The components of the aggregator 108 mentioned above can be deployed in a single enclosure, or in a distributed format. In some examples, therefore, the aggregator 108 includes a plurality of processors, either sharing the memory 304 and communications interface 308, or each having distinct associated memories and communications interfaces.

The memory 304 stores a plurality of computer-readable programming instructions, executable by the processor 300. The instructions stored in the memory 304 include an application 312, execution of which by the processor 300 configures the aggregator 108 to perform various functions related to the handling of search requests, including the selection of routing actions based on data from the repository 124, as outlined above. In other examples, the functions implemented by the application 312 can be divided between more than one application and/or more than one computing device.

The memory 304 also stores the repository 124 in this example. As noted earlier, in other examples the repository 124 can be stored at a distinct computing device or other network-accessible storage device, rather than in local memory 304 at the aggregator 108.

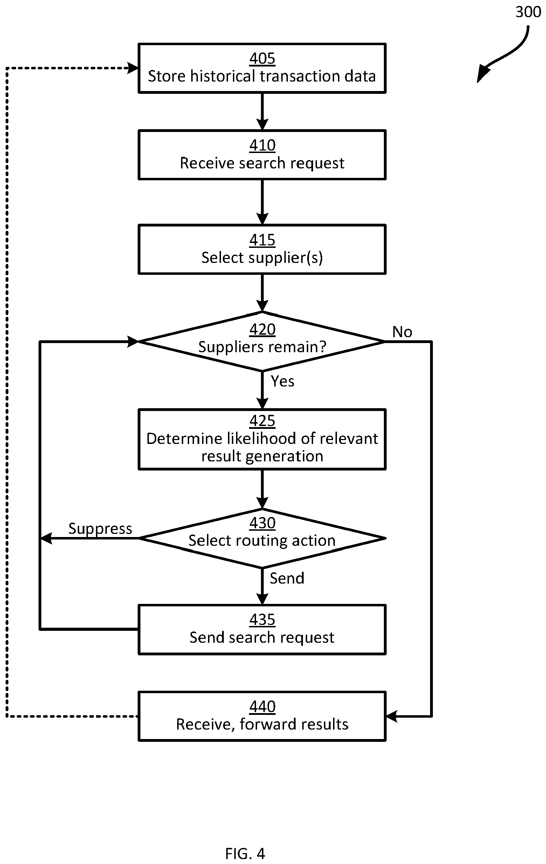

Turning to FIG. 4, a method 400 for predictive data source selection is illustrated. The method 400 will be described in conjunction with its example performance in the system 100. In particular, in the discussion below, the blocks of the method 400 are performed by the aggregator 108, in order to select specific supplier subsystems 116 (i.e., data sources) from which to request search results.

At block 405, the aggregator 108 is configured to store or otherwise access historical transaction data representing previous search requests (i.e., search requests previously received at the aggregator 108 from the client subsystem 104 or other client subsystems, and processed as outlined above to obtain and return search results). The historical transaction data can therefore include the previous search requests themselves and/or data representing such previous search requests (e.g., metadata derived from the previous search requests). The historical transaction data can further include the search results obtained for each search request, and/or as noted above in connection with the requests, data derived from the search results.

In addition, the historical transaction data can also include, for each previous search request, at least one outcome indicator. Typically, the historical transaction data includes or otherwise represents at least one outcome indicator, per search request, for each supplier subsystem 116. Outcome indicators can take a wide variety of forms, as will be discussed in greater detail below. For example, outcome indicators can include attributes of the search results arising from a search request, or values derived from such attributes. Outcome indicators can also include indications of how each search result was handled by the aggregator 108 (i.e., whether the search result was forwarded to the client subsystem 104 or discarded). In general, the outcome indicator(s) corresponding to a pairing of a search request and a supplier subsystem 116 in the historical data define whether that supplier subsystem 116 generated search results in response to the search request that meet a relevance threshold. The nature of the relevance threshold can also vary widely, as will be discussed further below.

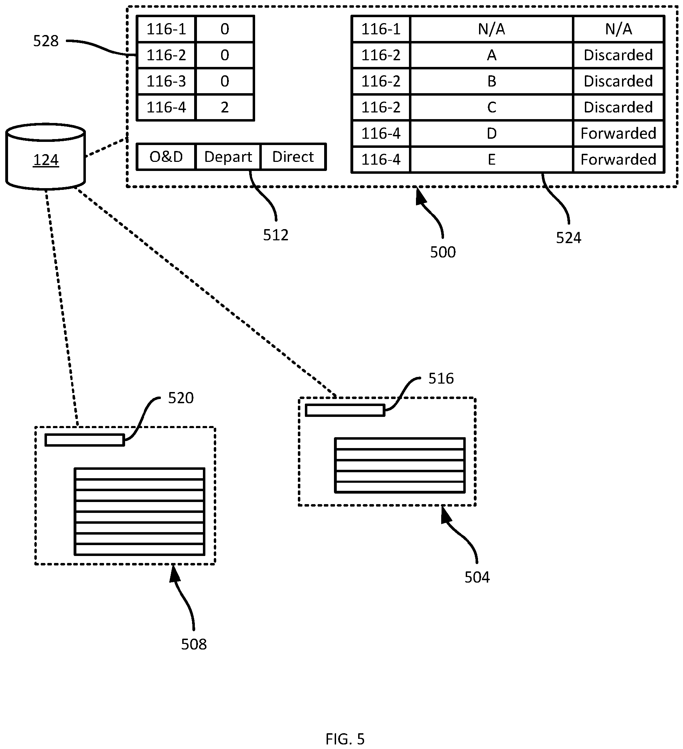

FIG. 5 illustrates certain content of the repository 124, in the form of three groups 500, 504, and 508 of related records. Each of the groups 500, 504, and 508 includes a record representing a previous search request. Thus, the group 500 contains a previous search request 512, the group 504 contains a previous search request 516, and the group 508 contains a previous search request 520. Each search request includes various search parameters. As shown in connection with the search request 512, in the context of the provision of travel items, the search parameters include origin and destination locations for a flight, as well a departure date, and an indication that direct flights are preferred over multi-leg flights. The search requests can include a wide variety of other parameters, and each search request may contain a different set of search parameters (e.g., some search requests may contain no indicator that direct flights are preferred). Examples of other search parameters include a number of passengers, a return date, a class preference (e.g., economy or business class), and the like. In some examples, the search parameters can include an account identifier or the like, distinguishing the client subsystem that submitted the search request from other client subsystems, or the operator thereof (e.g., the traveler seeking travel items) from other operators.

In association with each search request, the repository 124 can also contain search results arising from the search request. In the example of FIG. 5, the group 500 therefore includes a set of results 524. The groups 504 and 508 also include respective sets of results (five for the group 504, and eight for the group 508 - these numbers are purely illustrative, and it will be understood that the number of results obtained for each search request can vary widely). Each search result in the set 524 includes an identifier of the supplier subsystem 116 that generated the search result, as well as attributes of the search result, for instance including flight times, origin and destination locations, prices, ancillary services such as checked baggage allowances, and the like. Each search result can also be stored in association with a handling indicator, identifying whether the corresponding search result was discarded by the aggregator 108 or forwarded to the client subsystem 104. The handling indicators can also indicate other handling actions in some examples, such as whether a given result was not only returned to the client subsystem 104, but also led to further processing, such as a purchase or booking, initiated by the client subsystem 104.

As will be apparent, the set 524 of search results corresponds to the results illustrated in FIG. 2. That is, a null result is indicated for the supplier subsystem 116-1, the results "A", "B", and "C" are stored for the supplier subsystem 116-2, and the results "D" and "E" are stored for the supplier subsystem 116-4.

In some examples, the repository 124 can also store derived values obtained from the search results 524. In the example illustrated in FIG. 5, the group 500 of records includes values indicating the number of search results per supplier subsystem 116 that were forwarded to the client subsystem 104. As will be apparent, such values may also be derived from the stored search results 524, and therefore need not be stored in some examples. In other examples, however, such derived values may be calculated and stored, and the original, raw search results may be discarded. A wide variety of other derived values can also be stored or calculated as needed. Examples of such values include a minimum price (or, in other examples, an average price) of all search results produced by each supplier subsystem 116, an average price (and/or, in some examples, a maximum price) of all forwarded search results produced by each supplier subsystem 116, a fraction of search results generated by each supplier subsystem 116 that were forwarded to the client subsystem 104, and the like. Various combinations of the above can be employed as outcome indicators in the method 400.

Returning to FIG. 4, at block 410 the aggregator 108 is configured to receive a current search request from the client subsystem 104. The current search request includes a set of client search parameters, e.g., input by an operator of the client subsystem 104. The client search parameters, in the context of the provision of travel items as noted earlier, include origin and destination locations, as well a travel date or range of travel dates. The client search parameters can include a variety of additional values as noted above, but such additional values can also be omitted in some examples (i.e., these additional values are not mandatory). As noted earlier, examples of additional values are an indication of whether direct flights or multi-leg flights are preferred, a number of passengers, a return date, a class preference (e.g., economy, business class, or the like) a client account identifier, and the like.

At block 415, the aggregator 108 is configured to select at least a subset of the supplier subsystems 116. The aggregator 108 would conventionally pass the search request from block 410 to each supplier subsystem 116 in the subset selected at block 415. In the performance of the method 400, however, the subset of block 415 represents only candidate supplier subsystems 116, which will be further filtered by the aggregator 108 before the search request is distributed.

The selection at block 415 can be based on supplier profile data, e.g., stored in the repository 124, or obtained from the supplier subsystems 116 themselves by the aggregator 108. An example of the supplier profile data includes criteria defined by each supplier subsystem 116 representing search parameters for which the supplier subsystems 116 do or do not produce search results. Examples of such criteria include geographic regions. For example, profile data for a supplier subsystem 116 in the form of an airline may indicate a geographic region (e.g., a list of countries or the like) in which that airline operates. That supplier subsystem 116 is therefore not selected at block 415 if either or both of the origin and destination locations in the search request are outside the above-mentioned geographic region. Other criteria may also be included in the supplier profile data, such as identifiers of client subsystems 104 for which certain supplier subsystems 116 do or do not provide search results.

Having selected a subset of supplier subsystems 116 at block 415, as noted above, the aggregator 108 is configured to perform an additional assessment of each supplier subsystem 116 in the subset. Specifically, the aggregator 108 is configured to determine, based on the current search request and the historical data in the repository 124, a likelihood of each supplier subsystem in the subset generating search results meeting a relevance threshold. At block 420 the aggregator 108 is configured to determine whether the above assessment remains to be performed for any supplier subsystems 116 from the subset of block 415. When the determination at block 420 is affirmative, the aggregator 108 selects the next supplier subsystem 116 in the subset to assess, and proceeds to block 425.

At block 425, the aggregator 108 is configured to determine a likelihood that the supplier subsystem 116 under assessment will generate search results relevant to the current search request. The determination at block 425 is based on the current search request itself, as well as the historical data in the repository 124. In general, the determination at block 425 relies on an assumption that the likelihood of a supplier subsystem 116 generating relevant results for the current search request can be predicted based on whether that supplier subsystem 116 has previously generated relevant search results for previous search requests matching (or at least partially matching) the current search request.

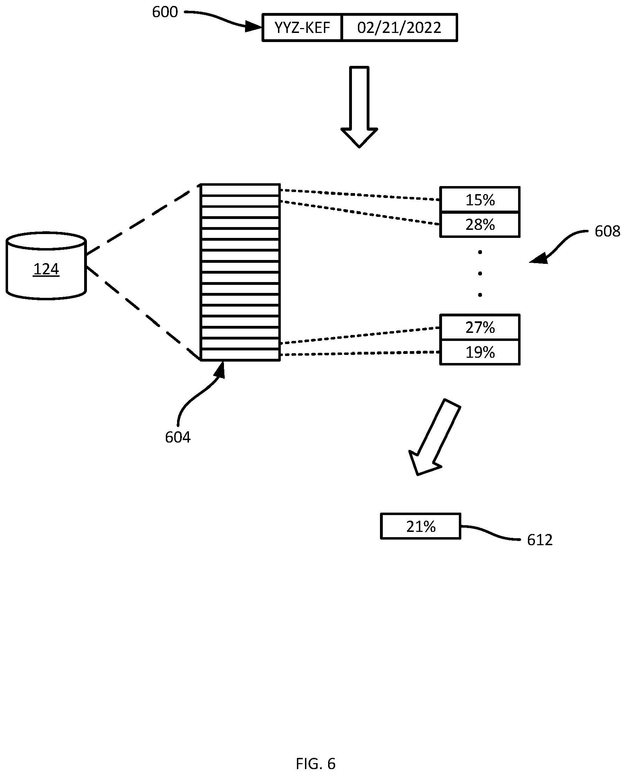

Various mechanisms are contemplated for performing the determination at block 425. In some examples as illustrated in FIG. 6, the aggregator 108 can be configured to search the repository for previous search requests having at least some search parameters in common with the current search request. For example, a current search request contains search parameters 600, including (but not limited to) an origin location "YYZ" (i.e., the IATA code for Toronto Pearson International Airport) and a destination location "KEF" (i.e., the IATA code for Keflavik International Airport), as well as a departure date (February 21, 2022). The aggregator 108 can be configured to retrieve from the repository 124 a set 604 of previous search requests having matching origin and destination locations, as well as departure dates with matching characteristics (e.g., matching day and month, matching day of the week, or the like).

For the retrieved search requests, the aggregator 108 can be configured to retrieve, or derive if such information is not explicitly stored in the repository 124, respective outcome indicators 608 in the form of a fraction (e.g., expressed as a percentage in FIG. 6) of the number of search results generated by the relevant supplier subsystem 116 that were forwarded to the client subsystem 104. The aggregator 108 can be configured to generate an average 612 of the outcome indicators 608. The aggregator 108 can then be configured to compare the average 612 to a predetermined relevance threshold (e.g., 20% in this example) to determine a likelihood that the supplier subsystem 116 will generate relevant results for the current search request 600. That is, if the average 612 meets or exceeds the threshold, the supplier subsystem 116 is deemed sufficiently likely to generate relevant results to the current search request.

As will be apparent, a wide variety of other data can contribute to the determination at block 425 in other examples. For instance, the aggregator 108 can be configured to retrieve not only the number or fraction of search results generated by a given supplier subsystem 116 that were forwarded to the client subsystem 116, but also the number or fraction of such search results (e.g., those forwarded) that led to a booking. The determination at block 425 can then be based on a weighted average of the above two values, e.g. to place a greater weight on search requests for which the supplier subsystem 116 produces search results that were later booked. Purely by way of example, 25% of the weighted average can be based on the fraction of search results forwarded, and 75% can be based on the fraction of forwarded search results that were booked. Thus, if the above fractions are 10% and 50%, respectively, the weighted average is 40%. The relevance threshold can therefore be set as a suitable percentage (or other fraction) to which the weighted average can be compared.

Various other attributes of the historical data can also be considered at block 425. For example, the aggregator can determine an average price of the search results generated by a supplier subsystem 116 for previous search requests matching the current search request. The average price can be compared to a predetermined relevance threshold, and the supplier subsystem 116 can be deemed likely to generate relevant search results only if the average price is below the relevance threshold, for example.

It is also contemplated that the current search request can include parameters beyond those shown in FIG. 6, which enable the set 604 of matching previous search requests to be narrowed. For example, the current search request can include a client identifier, and the aggregator 108 can be configured to retrieve previous search requests received from the same client identifier, or from a client category to which the client identifier belongs. Such a category can be retrieved from client profile data stored in the repository 124 or another repository accessible to the aggregator 108.

In other embodiments, the aggregator 108 can implement one or more machine learning models to perform the determination of a likelihood at block 425. The machine learning module(s) can be trained, for example, to predict the likelihood that each supplier subsystem 116 will generate relevant search results for any current search request, using the historical data in the repository 124.

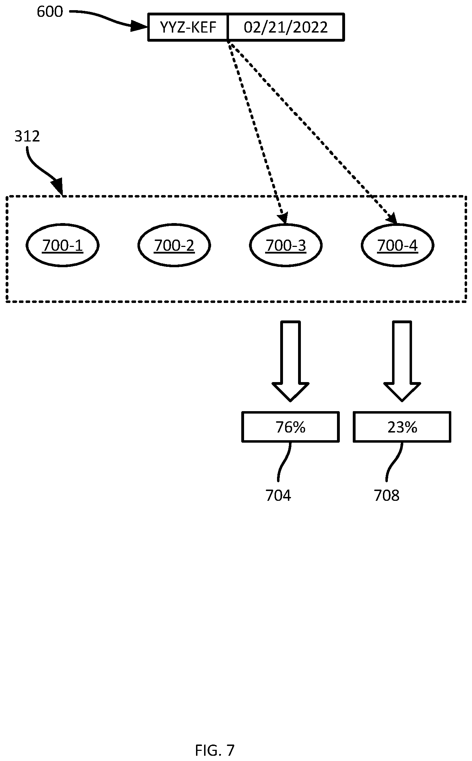

For example, turning to FIG. 7, in some examples the application 312 can include classifier modules (e.g., based on reinforcement learning techniques, deep learning techniques, or the like) corresponding to the respective supplier subsystems 116. Thus, in the illustrated example the application 312 includes classifier modules 700-1, 700-2, 700-3, and 700-4 corresponding respectively to the supplier subsystems 116-1, 116-2, 116-3, and 116-4. Each classifier 700 is configured, for the corresponding supplier subsystem 116, to receive search parameters as inputs (e.g., from the current search request and optionally client and/or supplier profile data), and to generate as output a likelihood that the corresponding supplier subsystem 116 will generate relevant search results for the current search request. The likelihood can be a binary classification (e.g. likely or not likely), a score, a percentage or other fraction, or the like.

The above-mentioned classifiers are so configured by way of stored configuration parameters, such as node weights, bias values, and the like. The configuration parameters are obtained via a training process, e.g., prior to deployment of the system 100 (although training can also be performed during use of the system 100 to update such configuration parameters). Training of the classifiers 700 can be accomplished via the provision of previous search requests along with labels consisting of outcome indicators for the previous search requests. The labels can include the handling indicators mentioned earlier, and/or any other suitable combination of values from search results generated by the relevant supplier subsystem 116 in response to each search request.

As seen in FIG. 7, presuming the supplier subsystems 116-3 and 116-4 are selected at block 415, at corresponding instances of block 425 (one instance for each selected supplier subsystem 116) the search parameters 600 are provided to the corresponding classifiers 700-3 and 700-4, which generate likelihoods 704 and 708.

The likelihood of a given supplier subsystem 116 returning relevant results can also be determined at block 425 by comparing a value such as the percentage relevant results returned by that supplier subsystem 116 for historical search requests relative to the same percentage for other supplier subsystems 116. Alternative comparisons can also be made, such as comparisons between average (and/or minimum, and/or maximum, as noted earlier) prices in search results from different supplier subsystems 116 for historical search requests, and the like. In such embodiments, the determination at block 425 is initiated for each supplier subsystem 116 from block 415, before proceeding to block 430 for any supplier subsystem 116.

Returning to FIG. 4, at block 430, the aggregator 108 is configured to select a routing action based on the likelihood determined at block 425. The routing action is either a suppression action, in which the search request from block 410 is not forwarded to the supplier subsystem 116, and a transmission action, in which the search request from block 410 is forwarded to the supplier subsystem 116. The suppression routing action is selected if the likelihood from block 425 is insufficient. For example, selection of a routing action can include comparing the likelihood to a relevance threshold (e.g., in the case of the fractional values shown in FIG. 7), and selecting the suppression action if the likelihood fails to meet the threshold. In other words, through the performance of blocks 425 and 430, the transmission of search requests to some supplier subsystems 116 may be suppressed, despite those supplier subsystems 116 having been selected at block 415.

When the suppression routing action is selected at block 430, the aggregator 108 returns to block 420 without sending the search request to the supplier subsystem under assessment. When the transmission routing action is selected, on the other hand, the aggregator 108 proceeds to block 435, and sends the search request to the supplier subsystem 116 before returning to block 420. For example, the search request can be conveyed to the relevant supplier subsystem 116 in a New Distribution Capability (NDC)-formatted message.

In some examples, at block 430 the selection of a routing action can be based on additional parameters, beyond the likelihood determined at block 425. For example, the aggregator 108 can be configured to send certain search requests to at least some suppliers even if the likelihood determined at block 425 is low, e.g., based on a statistical parameter such as a frequency, a randomly generated value, or the like. For instance, the aggregator 108 can be configured to select the transmission routing action at block 430 at least once per day, e.g., a randomly selected time of day, when the likelihood from block 425 was low. This may mitigate the risk of permanently excluding some supplier subsystems 116 from handling certain types of search request, by enabling the collection of updated transaction data from those supplier subsystems 116.

In further examples, such additional parameters can include a capacity or other traffic measurement corresponding to the relevant supplier subsystem 116. For example, supplier profile data in the repository 124 can indicate a maximum number of search requests that a supplier subsystem 116 can accommodate (e.g., in one second, minute, or other suitable time period). Thus, at block 430, if that number has been reached, the aggregator 108 can select the suppression routing action even when the likelihood at block 425 was high. In other examples, distinct relevance thresholds can be maintained for each supplier subsystem 116, e.g., to require a higher likelihood that search results from a given supplier subsystem 116 will be relevant in order to route a search request to that supplier subsystem 116, thus reducing the rate at which search requests will be routed to the supplier subsystem 116.

When the determination at block 420 is negative, indicating that each supplier subsystem 116 selected at block 415 has been assessed via block 425, the aggregator 108 proceeds to block 440. At block 440, the aggregator 108 is configured to receive search results from the supplier subsystems 116 to which search requests were sent via respective instances of block 435. In some examples, the suppliers 116 can be evaluated as described above prior to any search requests being sent at block 435. Any suppliers for which the selected routing action is to send a search request can then be contacted substantially simultaneously after a negative determination at block 420, and the aggregator 108 can await search results before performing block 440. The aggregator 108 is further configured, as noted earlier, to select a subset of the received search results for forwarding to the client subsystem 104. In addition, all received search results can be stored in the repository 124 along with handling indicators, as indicated by the dashed line returning from block 440 to block 405, for use in subsequent performances of the method 400 (and optionally, updating of the classifiers 700, e.g. via reinforcement learning).

As will now be apparent, the additional assessment of how likely the selected supplier subsystems 116 are to generate relevant results may reduce the computational burden associated with handling search requests, with little or no impact on the provision of relevant results to the client subsystem 104. For example, suppression of the transmission of a search request to a given supplier subsystem 116 avoids the usage of bandwidth associated with transmission of the search request and receipt of the search results from that supplier subsystem 116. Such suppression also avoids the expenditure of computational resources at the supplier subsystem 116 in generating search results, as well as the expenditure of computational resources at the aggregator 108 in evaluating those search results. However, due to the expected low likelihood of that supplier subsystem 116 generating relevant results, the impact of such suppression on the client subsystem 104 is minimal. For example, the client subsystem 104 may receive the same set of search results as would have been received in the absence of the optimizations described above.

The scope of the claims should not be limited by the embodiments set forth in the above examples, but should be given the broadest interpretation consistent with the description as a whole.

## Claims

1. A method, comprising:
at an aggregator, storing historical data representing:
(i) a plurality of previous search requests received at the aggregator, and
(ii) for each previous search request, an outcome indicator defining whether a supplier subsystem generated previous search results meeting a relevance threshold in response to the previous search request;
receiving, at the aggregator from a client subsystem, a search request containing a set of client search parameters;
in response to receiving the search request, determining, based on the search request and the historical data, a likelihood of the supplier subsystem generating search results meeting the relevance threshold; and
selecting, according to the likelihood, a routing action for the search request, relative to the supplier subsystem.

2. The method of claim 1, wherein the historical data includes (i) a set of the previous search requests, and (ii) respective outcome indicators for the previous search requests.

3. The method of any one of claims 1 to 2, wherein determining the likelihood includes:
selecting a subset of the previous search requests having attributes matching the search parameters of search request; and
retrieving the corresponding outcome indicators of the subset of previous search requests.

4. The method of any one of claims 1 to 3, wherein the historical data includes classifier configuration parameters derived from (i) a set of the previous search requests, and (ii) respective outcome indicators for the previous search requests.

5. The method of claim 4, wherein determining the likelihood includes:
providing the search request to a classifier configured according to the classifier configuration parameters; and
receiving the likelihood from the classifier.

6. The method of any one of claims 1 to 5, wherein the relevance threshold is whether at least one of the corresponding previous search results was returned from the aggregator to the client subsystem.

7. The method of any one of claims 1 to 6, wherein the relevance threshold is whether the corresponding previous search result was selected at the client subsystem.

8. The method of any one of claims 1 to 7, wherein the routing action includes, when the likelihood meets a threshold, sending the search request to the supplier subsystem.

9. The method of any one of claims 1 to 8, wherein the routing action includes, when the likelihood fails to meet a threshold, suppressing transmission of the search request to the supplier subsystem.

10. The method of any one of claims 1 to 9, wherein the routing action includes, when the likelihood fails to meet a threshold, sending the search request to the supplier subsystem according to a statistical parameter.

11. The method of any one of claims 1 to 10, further comprising:
prior to determining the likelihood, determining (i) a score corresponding to the supplier subsystem based on the search request and the historical data, and (ii) respective scores for at least one other supplier subsystem;
wherein determining the likelihood includes comparing the score to the scores for the at least one other supplier subsystem.

12. The method of any one of claims 1 to 11, further comprising selecting the routing action based on the likelihood and a request-handling capacity corresponding to the supplier subsystem.

13. A computing device, comprising:
a communications interface;
a memory storing historical data representing (i) a plurality of previous search requests received at the aggregator, and (ii) for each previous search request, an outcome indicator defining whether a supplier subsystem generated previous search results meeting a relevance threshold in response to the previous search request; and
a processor configured to:
receive, from a client subsystem, a search request containing a set of client search parameters;
in response to receiving the search request, determine, based on the search request and the historical data, a likelihood of the supplier subsystem generating search results meeting the relevance threshold; and
select, according to the likelihood, a routing action for the search request, relative to the supplier subsystem.

14. The computing device of claim 13, wherein the computing device is arranged to execute the method of any one of claims 2 to 12.

15. A computer program comprising program code instructions to execute the method steps according to any one of the claims 1 to 12 when said program is executed on a computer.
